# FASCICULE DE BREVET EUROPEEN

(11) **EP 2 591 274 B1**
(45) Date de publication et mention de la délivrance du brevet: **02.07.2014**
(21) Numéro de dépôt: 11727232.8
(22) Date de dépôt: 19.05.2011
(51) Int. Cl.: F17C 13/04

(54) **RACCORD DE REMPLISSAGE, RÉCIPIENT ET PROCÉDÉ DE REMPLISSAGE**
FÜLLANSCHLUSS, BEHÄLTER UND FÜLLVERFAHREN
FILLING CONNECTOR, CONTAINER AND FILLING METHOD

(30) Priorité: 09.07.2010 FR 1055607
(43) Date de publication de la demande: 15.05.2013
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FRENAL, Antoine, F-95460 Ezanville (FR); MANSCOURT, Cyril, F-75018 Paris (FR); PISOT, Philippe, 38140 Apprieu (FR)
(74) Mandataire: De Cuenca, Emmanuel Jaime
(86) Numéro de dépôt international: PCT/FR2011/051134
(87) Numéro de publication internationale: WO 2012/004484

(56) Documents cités:
- EP-A1- 1 530 002
- DE-A1- 10 159 916
- DE-U1- 8 713 518
- FR-A1- 2 214 859
- FR-A1- 2 898 954
- US-B1- 6 607 007

## Description

La présente invention concerne un raccord de remplissage, un robinet, un récipient de fluide sous pression et un procédé de remplissage utilisant un tel raccord.

L'invention concerne plus particulièrement un raccord de remplissage pour récipient de fluide sous pression destiné à coopérer avec une prise de conditionnement pour permettre le remplissage dudit récipient, le raccord comprenant un corps définissant un circuit interne de remplissage entre une extrémité amont de connexion à une prise de conditionnement et une extrémité aval de liaison avec un récipient, le raccord comprenant un clapet d'isolement mobile relativement à un siège entre une position amont de fermeture du circuit et une position aval d'ouverture du circuit, ledit clapet d'isolement étant sollicité vers sa position amont par un organe de rappel, le raccord comprenant en outre un clapet pare-poussière disposé en amont du clapet d'isolement, ledit clapet pare poussière étant mobile relativement au corps entre une position amont de fermeture de l'extrémité amont du circuit et une position aval d'ouverture de l'extrémité amont circuit, ledit clapet pare-poussière étant sollicité vers sa position amont par un organe de rappel.

La présente concerne en particulier un raccord de remplissage comprenant en série, d'amont en aval (dans le sens d'un remplissage de gaz), un clapet pare-poussière et un clapet d'isolement.

Le clapet pare-poussière est prévu notamment pour former une barrière en amont du clapet d'isolation pour empêcher ou limiter l'intrusion de particules ou de poussières pouvant altérer l'étanchéité dudit clapet d'isolement. Un raccord comprenant un clapet pare-poussière est notamment connue de EP 1530002 A2.

Il est également connu de prévoir des raccords de remplissage comportant un mécanisme anti-retour (désigné par l'acronyme « NRV » pour « Non Return Valve » en anglais). Un tel mécanisme est prévu pour empêcher l'ouverture du clapet par la seule pression de fluide en amont du clapet. Ce type de mécanisme est notamment prévu pour sécuriser l'ouverture du clapet en ne permettant qu'une ouverture par une action mécanique (en général un pousse-clapet mobile spécialement adaptée au raccord). Ainsi, lorsqu'un remplissage est réalisé par des personnes non autorisées ou par des personnes ne respectant par la procédure adéquate en soumettant le clapet à une pression de fluide en amont, le mécanisme anti-retour génère un effort sur un clapet pour le contraindre à se fermer contre son siège. L'augmentation de la pression de gaz en amont renforce même la fermeture du clapet.

L'invention vise à proposer un raccord ayant une structure assurant une grande sécurité dans la fermeture et l'ouverture du raccord de remplissage. L'invention vise notamment à proposer une architecture à double clapets de remplissage offrant une bonne étanchéité, une grande facilité d'ouverture et de fermeture tout en minimisant les risques de pollution du système à double clapets.

A cette fin, le selon raccord l'invention, par ailleurs conforme à la définition générique qu'en donne le préambule ci-dessus, est essentiellement caractérisé en ce que le clapet d'isolement comprend un mécanisme anti-retour (« NRV ») générant un effort sur le clapet d'isolement le sollicitant vers l'amont lorsque ce dernier est soumis uniquement à une pression fluidique dans sa partie amont, et en ce que, lorsque ledit clapet pare-poussière est dans une position aval déterminée, une extrémité aval du clapet pare-poussière vient pousser une extrémité amont clapet d'isolement mobile pour déplacer le clapet d'isolement vers sa position aval d'ouverture du circuit.

Pour encore diminuer les risques de pollution du clapet par des particules extérieures le raccord peut comprendre le clapet pare-poussière peut porter un filtre interposé sur le trajet d'au moins une partie du fluide qui transite entre l'amont et l'aval du circuit, le filtre étant mobile avec le clapet pare-poussière.

Ainsi, selon l'invention, un dispositif de filtration tel qu'un ou plusieurs filtres est intégré sur une pièce mobile qui forme un clapet amont pare-poussière.

De cette façon, une double barrière de protection est prévue en amont du clapet d'isolation. En effet, le corps du clapet pare-poussière forme un premier bouchon amovible à l'entrée amont du raccord et le filtre forme une seconde barrière qui retient les particules lorsque le clapet pare-poussière ouvre l'entrée du raccord.

De plus, cette architecture à double clapets et filtre mobile forme un mécanisme de protection efficace dans un processus de remplissage permettant une protection améliorée du clapet d'isolation aval.

L'agencement du clapet pare-poussière et du flitre mobile coopère facilement avec différentes prises de conditionnement. En effet, le clapet pare-poussière et le filtre mobile se déplacent pour permettre l'ouverture de l'amont du raccord tout en protégeant des particules le clapet d'isolation aval. De plus, cet agencement permet l'actionnement du clapet d'isolation aval par contact mécanique.

L'agencement du raccord à double clapets, du mécanisme anti-retour et du filtre mobile selon l'invention présente de nombreux avantages parmi lesquels:
- une protection élevée du clapet d'isolation contre des salissures,
- une protection élevée contre des remplissages hasardeux et
- des séquences d'ouverture/fermeture des clapets sécurisées.

L'invention offre en effet une grande sécurité dans les séquences d'ouverture/fermeture du raccord de remplissage. De plus, le remplissage selon l'invention préserve l'étanchéité du raccord durant la durée de vie du raccord.

Ainsi, le clapet amont pare-poussière participe avantageusement à l'ouverture mécanique du clapet d'isolation aval en transmettant un effort d'ouverture d'amont en aval. C'est-à-dire que le clapet pare-poussière forme un organe de transmission de mouvement entre une prise de conditionnement et le clapet d'isolation aval.

Le clapet amont pare-poussière peut ainsi assurer les fonctions suivantes :
- l'ouverture/fermeture de l'amont du circuit,
- la transmission de mouvement mécanique pour commander sélectivement l'ouverture ou la fermeture du clapet aval d'isolation et, éventuellement,
- la filtration du flux de gaz en amont du clapet d'isolation aval lors d'un processus de remplissage.

Selon des particularités possibles :
- le raccord comporte un ou des passages pour guider au moins une partie du flux de fluide transitant d'amont en aval à travers de filtre,
- le clapet pare-poussière coulisse dans le circuit, le ou des passages contraignant la totalité ou la quasi-totalité du flux de fluide transitant d'amont en aval dans le circuit à passer à travers de filtre quelle que soit la position aval du clapet pare-poussière,
- le ou les passages comprennent un ou des conduits internes traversant le corps du clapet pare-poussière et/ou traversant le corps du raccord,
- le déplacement du clapet d'isolement dans une position aval d'ouverture du circuit est réalisée par actionnement mécanique via le clapet pare-poussière, ledit clapet pare-poussière étant déplaçable vers l'aval par actionnement mécanique et/ou par du fluide sous pression,
- le mécanisme anti-retour (« NRV ») comprend un canal reliant l'extrémité amont du clapet d'isolement à une chambre aval, pour transformer une pression fluidique sur la partie amont du clapet en un effort sur l'extrémité aval du clapet d'isolement tendant à déplacer ledit clapet d'isolement en position amont de fermeture,
- le mécanisme anti-retour (« NRV ») comporte un rapport de surfaces déterminé entre d'une part l'extrémité amont du clapet d'isolement soumise à un fluide amont et, d'autre part, l'extrémité aval du clapet d'isolement communiquant avec la chambre, pour solliciter ledit clapet d'isolement en position amont de fermeture lorsque son extrémité amont est soumise à du fluide sous pression,
- le clapet pare-poussière comporte une extrémité amont actionnable mécaniquement et/ou via du fluide sous pression,
- le clapet d'isolement mobile comporte une garniture d'étanchéité souple destiné à coopérer avec le siège pour réaliser la fermeture étanche du circuit lorsque le clapet est sollicité contre le siège avec une pression déterminée,
- en position amont de fermeture, le clapet pare-poussière obture de façon étanche l'extrémité amont circuit,
- en position amont du clapet pare-poussière, l'extrémité amont du clapet pare-poussière referme l'extrémité amont du circuit de façon affleurante à l'extrémité amont du corps du raccord,
- le corps du clapet pare-poussière coulisse de façon étanche dans le circuit,
- l'étanchéité entre le clapet pare-poussière et le corps du raccord est réalisée par contact métal/métal et/ou via au moins un joint,
- le ou les passages comprennent au moins un espacement entre le clapet pare-poussière et le corps du raccord pour contraindre la totalité ou la quasi-totalité du flux de fluide transitant d'amont en aval dans le circuit à passer à travers de filtre,
- l'organe de rappel sollicitant le clapet d'isolement vers sa position amont comprend au moins l'un parmi : un ressort de compression, un ressort de traction,
- l'organe de rappel sollicitant le clapet pare-poussière vers sa position amont comprend au moins l'un parmi : un ressort de compression, un ressort de traction,
- l'extrémité aval du clapet pare-poussière comprend une tige pour actionner mécaniquement l'extrémité amont du clapet d'isolement,
- l'extrémité amont du clapet d'isolement comprend une surface destinée à coopérer en contact mécanique avec l'extrémité aval du clapet pare-poussière,
- le filtre comprend au moins l'un parmi du feutre, un métal fritté, une grille métallique ou non métallique, une structure à billes métalliques ou non métalliques agglomérées,
- le filtre est déplacé avec le clapet pare-poussière lors des opérations d'ouverture et de fermeture dudit clapet,
- le filtre est disposé sur le clapet pare-poussière en aval de l'extrémité amont dudit clapet,
- le filtre n'est pas soumis à un contact mécanique direct d'un pousse-clapet lorsque le clapet pare-poussière est poussé vers l'aval par un pousse-clapet d'une prise de remplissage,
- le siège du clapet d'isolement est formé par un épaulement d'un cadre tubulaire solidaire du corps du raccord, le clapet d'isolement coulissant dans ce cadre, l'extrémité aval du clapet pare-poussière entrant dans ledit cadre lorsque le clapet pare-poussière vient en position aval,
   - le raccord comporte une butée destinée à coopérer avec le clapet pare-poussière pour limiter la position aval maximale de ce dernier,
   - la butée destinée à coopérer avec le clapet pare-poussière pour limiter la position aval maximale de ce dernier est solidaire du corps du raccord et/ou d'un cadre solidaire du corps et définissant le siège du clapet d'isolement,
   - la surface extérieure et/ou interne du corps du raccord comprend des empreintes formant des creux et/ou des reliefs d'attache destinés à coopérer avec des formes conjuguées d'une prise de conditionnement pour former un système d'attache mécanique, notamment à connexion rapide,
   - le filtre est un filtre pour gaz destiné à retenir des particules solides.

L'invention concerne également un robinet pour fluide sous pression, en particulier pour gaz sous pression, avec ou sans détendeur de pression, comprenant un raccord de remplissage destiné à coopérer avec une prise de conditionnement pour permettre le remplissage dudit récipient via ledit raccord, le raccord de remplissage étant conforme à l'une quelconque des caractéristiques ci-dessus ou ci-après.

L'invention concerne également un récipient de fluide sous pression, en particulier bouteille de gaz sous pression, comprenant un tel robinet.

L'invention concerne également un procédé de remplissage d'un tel récipient de gaz sous pression au moyen d'une prise de conditionnement connectée audit raccord de remplissage du récipient, le procédé comportant une première étape de déplacement du clapet pare-poussière vers une position aval d'ouverture de l'extrémité amont du circuit via un actionnement mécanique et/ou un actionnement fluidique et une seconde étape de déplacement du clapet d'isolement vers une position aval d'ouverture via un actionnement mécanique réalisé par le clapet pare-poussière.

Selon d'autres particularités possibles :
- le clapet pare-poussière est déplacé vers l'aval par une action mécanique d'une extrémité d'un pousse-clapet appartenant à la prise de conditionnement,
- en fin de processus de remplissage d'un récipient de gaz sous pression, le clapet d'isolement est refermé automatiquement lorsque l'effort mécanique exercé sur le clapet devient inférieur à un seuil déterminé,
- en fin de processus de remplissage la fermeture du clapet d'isolement est réalisée avant la fermeture du clapet pare-poussière.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe schématique illustrant un premier exemple de réalisation d'un raccord de remplissage selon l'invention monté sur un robinet de récipient dans un état fermé (deux clapets internes amont et aval fermés),
- la figure 2 représente une vue en perspective et en coupe du raccord de la figure 1 dans un état ouvert (deux clapets internes amont et aval ouverts),
- la figure 3 représente une vue en perspective et en coupe du raccord de la figure 1 dans un état fermé (clapet amont ouvert et clapet aval fermé),
- la figure 4 représente une vue en coupe, schématique et partielle, illustrant la structure d'un raccord de remplissage selon l'invention dans son état ouvert correspondant à la configuration de la figure 2 (deux clapets internes amont et aval ouverts),
- la figure 5 représente une vue en coupe, schématique et partielle, illustrant la structure d'un raccord de remplissage selon l'invention dans son état fermé correspondant à la configuration de la figure 3 (clapet amont ouvert et clapet aval fermé).

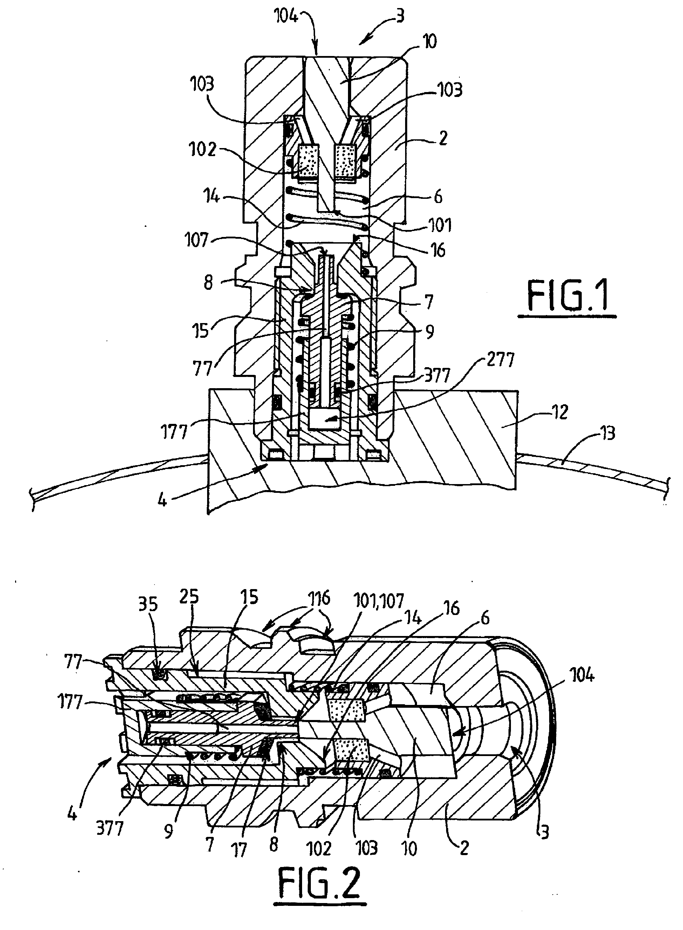

En se référant à présent à la figure 1, le raccord 1 de remplissage comprend un corps 2, par exemple de forme générale cylindrique. Le corps 2 définit un circuit 6 interne de remplissage entre une extrémité amont 3 destinée à être reliée à une prise de conditionnement et une extrémité aval 4 destinée à être reliée un récipient 13 de gaz sous pression (via par exemple le circuit interne d'un robinet 12).

Les termes amont et aval définissent l'écoulement d'un gaz de remplissage depuis une prise de conditionnement vers l'intérieur d'un récipient.

L'extrémité amont 3 du circuit 6 (et du raccord 1) est sélectivement refermable par un 10 clapet pare-poussière mobile dans le corps 2 du raccord.

Le clapet 10 pare-poussière est sélectivement mobile dans le corps 2 (de préférence mobile en translation) entre une position amont de fermeture de l'extrémité amont 3 du circuit 6 et une position aval d'ouverture de l'extrémité amont 3 circuit. De préférence, le clapet 10 pare-poussière est sollicité vers sa position amont par un organe 14 de rappel, par exemple un ressort tel qu'un ressort de compression.

De préférence, en position amont de fermeture le clapet 10 pare-poussière est logé dans le corps 2 du raccord et affleure sur la surface extrême du corps 2 du raccord 1.

Le clapet 10 pare-poussière ferme l'entrée amont 3 du circuit de façon étanche (ou non étanche) par contact avec le corps 2 du raccord 1. Le corps du clapet pare-poussière 10 peut comporter un ou plusieurs joints 105 obturant de façon étanche le circuit 6.

Comme représenté, le clapet 10 pare-poussière peut porter de façon facultative un élément filtrant tel qu'un ou plusieurs filtres 102 destiné à retenir des particules solides ayant une dimension supérieure à un seuil déterminée Par exemple, le ou les filtres 102 retiennent les particules ayant des dimensions supérieures à 0,1 mm ou supérieures à 0,05mm ou supérieures à 1 mm ou supérieures à 1 mm ou supérieures à 2mm ou supérieures à 3mm (selon les besoins ou selon la norme applicable : médicale ou industrielle). Bien entendu, l'invention n'est pas limitée à ces exemples précis et le filtre peut être prévu pour retenir des particules de taille plus réduite ou plus grande que les exemples ci-dessus.

Le filtre 102 comprend par exemple au moins l'un parmi : du feutre, une structure poreuse en métal fritté, une ou plusieurs grilles métallique et/ou non métalliques, une structure poreuse à billes métalliques ou non métalliques agglomérées ou toute autre structure et matériau.

Le filtre 102 est mobile avec le clapet 10 pare-poussière. Le filtre 102 est interposé sur le trajet d'au moins une partie du fluide qui transite entre l'amont 3 et l'aval 4 du circuit 6.

A cet effet, le clapet 10 pare-poussière peut comporter un ou des passages 103 guidant au moins une partie et de préférence tout le flux de fluide transitant d'amont 3 en aval 4 à travers de filtre 102. C'est-à-dire que, lorsqu'un gaz transite d'amont 3 en aval 4, le ou les passages 103 contraignent la totalité ou la quasi-totalité du flux de gaz à passer à travers de filtre 102 quelle que soit la position aval du clapet 10 pare-poussière. Les passages 103 peuvent comprendre des conduits internes traversant le corps du clapet 10.

En variante ou en combinaison, il est possible d'envisager des conduits ou passages traversant le corps 2 du raccord 1. De même, en variante ou en combinaison, il est possible d'envisager un ou des passages 103 formés par un espacement entre le clapet 10 pare-poussière et le corps 2 du raccord.

En aval du clapet 10 pare-poussière, le circuit 6 contient un clapet 7 d'isolement mobile relativement à un siège 8. Le clapet 7 d'isolement est mobile de préférence en translation entre une position amont de fermeture du circuit et une position aval d'ouverture du circuit. Le clapet 7 d'isolement est sollicité par défaut vers sa position amont par un organe 9 de rappel tel qu'un ressort notamment un ressort de compression.

Comme représenté, le clapet 7 d'isolement peut comporter une garniture 17 d'étanchéité souple destiné à coopérer avec le siège 8. La garniture 17 souple peut comprendre du plastique, un polymère, un élastomère vulcanisée ou tout autre matériau approprié.

Comme représenté, sans que ce soit nécessaire, le siège 8 du clapet 7 d'isolement peut être formé par un épaulement annulaire solidaire d'un cadre 15 tubulaire fixé dans le corps 2 du raccord (par exemple par vissage 25 étanche 35).

Par exemple, le clapet 7 d'isolement coulisse dans ce cadre 15. Une extrémité 16 de ce cadre 15 ou du siège 8 peut par exemple former une butée 16 destinée à coopérer avec le clapet 10 pare-poussière pour limiter la position aval maximale de ce dernier. De même, le ressort 14 du clapet pare-poussière peut prendre appui sur ce cadre 15.

Le clapet 7 d'isolement comprend également un mécanisme 7, 177 anti-retour (« NRV ») pour générer un effort sur le clapet 7 d'isolement le sollicitant vers l'amont lorsque ce dernier est soumis à une pression fluidique dans sa partie amont.

Comme représenté, le mécanisme anti-retour (« NRV ») peut comprendre un canal 77 interne reliant l'extrémité amont 107 du clapet 7 d'isolement à une chambre 277 aval étanche. Cette chambre 277 aval est par exemple délimitée par un tube 177 borgne dans lequel le clapet 7 d'isolement coulisse de façon étanche (joint(s) 377). Le gaz admis dans la chambre 277 aval transforme une pression fluidique sur la partie amont 107 du clapet 7 en un effort sur l'extrémité aval du clapet 7 d'isolement tendant à le déplacer en position amont de fermeture.

A cet effet, le mécanisme anti-retour (« NRV ») comporte un rapport de surfaces déterminé entre d'une part l'extrémité amont 107 du clapet 7 d'isolement soumise à un fluide amont et, d'autre part, l'extrémité aval du clapet 7 d'isolement communiquant avec la chambre 277. Ainsi, lorsque la pression d'un gaz sur l'extrémité amont 107 du clapet 7 d'isolation augment, par réaction, l'effort de fermeture du clapet 7 (vers l'amont) augmente également.

Le clapet 10 pare-poussière comporte une extrémité ou surface amont 104 actionnable mécaniquement (c'est-à-dire par contact solide) et/ou via du fluide sous pression.

De préférence, le filtre 102 est disposé sur le clapet 10 pare-poussière en aval de l'extrémité amont 104 dudit clapet 10. De cette façon, le filtre 102 n'est pas directement soumis à un contact mécanique ou à une pression lorsque le clapet 10 pare-poussière est poussé vers l'aval.

La figure 1 représente le raccord 1 schématiquement monté sur un robinet 12 d'un récipient 13 tel qu'une bouteille de gaz sous pression.

De préférence, la surface extérieure du corps 2 du raccord 1 comprend des empreintes 116 formant des creux et/ou des reliefs d'attache destinés à coopérer avec des formes conjuguées d'une prise de conditionnement (non représentée) pour former un système d'attache mécanique, notamment à connexion rapide.

En particulier, de préférence, les empreintes 116 sont dimensionnées et positionnées selon une géométrie déterminée, pour de préférence s'adapter à une prise de conditionnement conjuguée déterminée (et uniquement à celle-ci).

Comme représenté à la figure 2, le clapet 10 pare-poussière est sélectivement déplaçable vers l'aval par un actionnement mécanique, par exemple par un pousse-clapet sélectivement mobile en réponse à un actuateur tel qu'un levier pivotant par exemple. Un pousse-clapet est susceptible de s'introduire dans le raccord 1 de façon étanche pour y délivrer du gaz sous pression.

Comme visible à la figure 2, lorsque le clapet 10 pare-poussière est amené dans une position aval déterminée dite « de contact » (avec l'extrémité amont 3 ouverte), une extrémité 101 aval du clapet 10 pare-poussière vient pousser une extrémité amont 107 du clapet 7 d'isolement pour déplacer le clapet 7 d'isolement vers sa position aval d'ouverture du circuit 6.

C'est-à-dire que le clapet 7 d'isolement est déplaçable sélectivement dans une position aval d'ouverture du circuit par l'action mécanique du clapet 10 pare-poussière.

A cet effet, comme représenté aux figures, le clapet 10 pare-poussière peut comporter une extrémité 101 aval en forme de tige dont la surface terminale est prévue pour actionner mécaniquement l'extrémité 107 amont du clapet 7 d'isolement. L'extrémité 107 amont du clapet 7 d'isolement peut également être formée par une tige qui vient faire saillie vers l'amont par rapport au siège 8 de forme générale annulaire.

Ainsi, à partir d'une position fermée (clapet 10 pare-poussière amont fermé et clapet d'isolement aval fermé, cf. figure 1), une prise de conditionnement (ou tout autre organe autorisé qui permet de réaliser un accrochage mécanique sur le raccord et une étanchéité à la pression entre la prise et le raccord en toute sécurité) peut pousser mécaniquement l'extrémité amont 104 du clapet 10 pare-poussière (cf. figure 2).

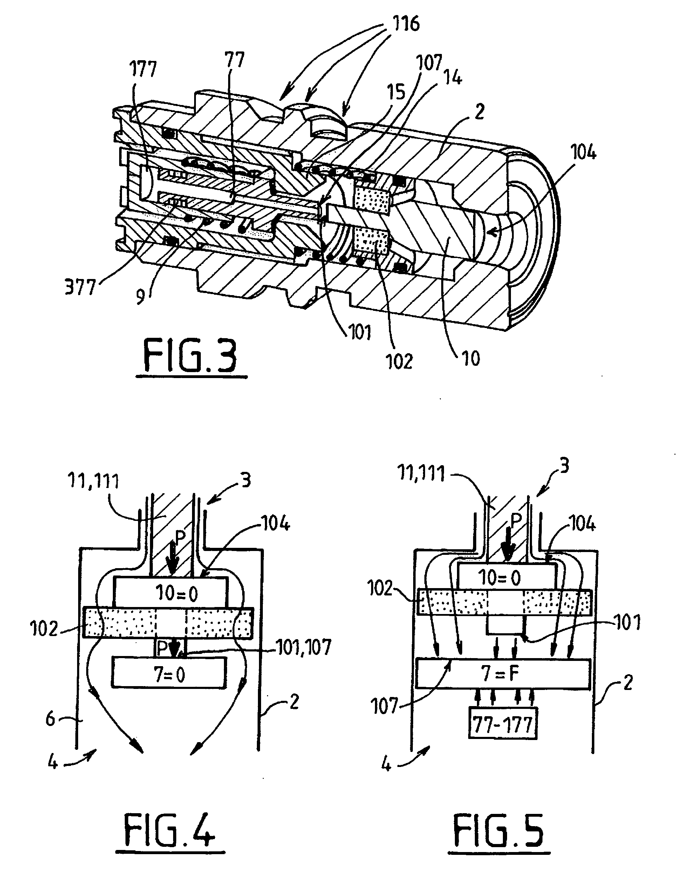

Les figures 4 et 5 illustre de façon schématique et simplifiée la structure et le fonctionnement du raccord. Les mêmes éléments que ceux décrits ci-dessus sont désignés par les mêmes références numériques et ne sont pas décrits une seconde fois.

Comme représenté schématiquement à la figure 4, un pousse-clapet 11 mobile d'une prise de conditionnement 111 peut être prévu pour pousser mécaniquement l'extrémité 104 du clapet 10 pare-poussière vers l'aval.

Le clapet 10 pare-poussière et le filtre 102 sont ainsi déplacés vers l'aval (cf. figures 2 et 4). L'entrée du circuit 6 du raccord 2 est alors ouverte « O » (cf. figures 2 et figure 4). L'extrémité aval 101 du clapet 10 pare-poussière vient à son tour pousser l'extrémité amont 107 du clapet 7 d'isolation (pression mécanique P, cf. figure 4) qui ouvre alors l'extrémité aval du circuit 6 (« O » figure 4). Le flux de gaz sous pression peut transiter d'amont en aval (symbolisé par les flèches à la figure 4).

Bien entendu, ce mode d'ouverture et de remplissage n'est pas limité à cet exemple. Ainsi, comme représenté à la figure 5, selon les conditions de remplissage, l'extrémité amont 104 du clapet pare-poussière 10 peut être poussée vers l'aval par le flux de gaz lui-même (symbolisé par les flèches). L'extrémité aval 101 du clapet 10 pare-poussière peut ensuite pousser mécaniquement (pression P) le clapet 7 d'isolement.

En revanche, si le clapet 10 pare-poussière est ouvert par une pression de gaz et ne se déplace pas suffisamment en aval pour pousser mécaniquement le clapet 7 d'isolation, le clapet 7 d'isolation est maintenu fermé (« F », cf. figure 5) par le mécanisme anti-retour 7, 177 décrit ci-dessus.

De même, si le clapet 10 pare-poussière est ouvert (« O », cf. figure 5) par une poussée mécanique mais ne se déplace pas suffisamment en aval pour pousser mécaniquement le clapet 7 d'isolation, le clapet 7 d'isolation est maintenu fermé (« F », cf. figure 5) par le mécanisme anti-retour 77, 177 décrit ci-dessus.

Cette état dans lequel le clapet 10 pare-poussière est ouvert et le clapet 7 d'isolation est maintenu fermé est représentée aux figures 3 et 5.

Ainsi, on comprend aisément que les ouvertures des deux clapets 10, 7 en série sont dépendantes de la géométrie de la prise de remplissage et des conditions de remplissage.

Ceci garantie un contrôle de la sécurité d'utilisation au raccord lors d'un remplissage, en évitant notamment des manipulations dangereuses.

Le mécanisme anti-retour permet en particulier de garantir une procédure de remplissage en toute sécurité en obligeant l'opérateur à actionner le pousse-clapet 10 pour ouvrir le clapet 7 d'isolement. Cette architecture permet tout de même de réaliser des tests d'étanchéité du clapet 7 d'isolement avant ou après remplissage. En effet, en ouvrant le clapet pare-poussière uniquement (clapet 7 d'isolement fermé), une mise au vide et une mesure de pression en amont du clapet 7 d'isolement permet de vérifier l'étanchéité du clapet 7 d'isolement.

De plus, lorsqu'un filtre 102 mobile est prévu sur le clapet 10 pare-poussière, le remplissage de gaz assure dans tous les cas une filtration du gaz en amont du clapet 7 d'isolation. Ce filtre 102 facultatif ne s'oppose pas à l'actionnement mécanique du clapet pare-poussière 10.

L'ouverture du raccord lors d'un remplissage selon l'invention est obtenue de façon séquentielle des deux clapets 10, 7 en série (d'abord le clapet 10 pare-poussière puis le clapet 7 d'isolation, par une poussée réalisée par le clapet 10 lui-même).

En fin de processus de remplissage d'un récipient de gaz sous pression, le clapet 7 d'isolement est refermé automatiquement par l'action du ressort 9 lorsque l'effort mécanique devient inférieur à un seuil déterminé. Lors de la fin de l'opération de remplissage le clapet 7 d'isolement vient se refermer en principe avant que ne se referme le clapet 10 pare-poussière.

Cette architecture et ce mode de remplissage permettent de garantir la sécurité du remplissage et la tenue de l'étanchéité du raccord après de multiples remplissages.

L'utilisation de ce raccord sur des robinets de gaz de préférence munis de détendeurs de pression offre de nombreux avantages. En effet, les récipients (bouteilles par exemple) de gaz munis de tels robinets peuvent être remplis en toute sécurité et peuvent conserver un même raccord de remplissage des années durant sans pour autant mettre en péril l'étanchéité du raccord.

L'invention permet ainsi d'améliorer la protection de l'opérateur chargé du remplissage.

L'invention permet également d'augmenter la fiabilité de l'étanchéité du raccord au cours de la durée de vie du robinet et de la bouteille.

L'invention s'applique avantageusement aux raccords de remplissage et systèmes de remplissage pour bouteilles de gaz sous pression par exemple entre 150 et 750 bar) équipées de robinets avec des détendeurs intégrés ou à détendeurs amovibles.

## Revendications

1. Raccord de remplissage pour récipient de fluide sous pression destiné à coopérer avec une prise de conditionnement pour permettre le remplissage dudit récipient, le raccord (1) comprenant un corps (2) définissant un circuit (6) interne de remplissage entre une extrémité amont (3) de connexion à une prise de conditionnement et une extrémité aval (4) de liaison avec un récipient, le raccord comprenant un clapet (7) d'isolement mobile relativement à un siège (8) entre une position amont de fermeture du circuit (6) et une position aval d'ouverture du circuit, ledit clapet (7) d'isolement étant sollicité vers sa position amont par un organe (9) de rappel, le raccord comprenant en outre un clapet (10) pare-poussière disposé en amont du clapet (7) d'isolement, ledit clapet (10) pare poussière étant mobile relativement au corps (2) entre une position amont de fermeture de l'extrémité amont du circuit (6) et une position aval d'ouverture de l'extrémité amont circuit, ledit clapet (10) pare-poussière étant sollicité vers sa position amont par un organe (14) de rappel, **caractérisé en ce que** le clapet (7) d'isolement comprend un mécanisme (7, 177) anti-retour (« NRV ») générant un effort sur le clapet (7) d'isolement le sollicitant vers l'amont lorsque ce dernier est soumis uniquement à une pression fluidique dans sa partie amont, et **en ce que**, lorsque ledit clapet (10) pare-poussière est dans une position aval déterminée, une extrémité (101) aval du clapet (10) pare-poussière vient pousser une extrémité amont (107) clapet (7) d'isolement mobile pour déplacer le clapet (7) d'isolement vers sa position aval d'ouverture du circuit.

2. Raccord selon la revendication 1, **caractérisé en ce que** le clapet (10) pare-poussière porte un filtre (102) interposé sur le trajet d'au moins une partie du fluide qui transite entre l'amont (3) et l'aval (4) du circuit (6), le filtre (102) étant mobile avec le clapet (10) pare-poussière.

3. Raccord selon la revendication 2, **caractérisé en ce qu'**il comporte un ou des passages (103) pour guider au moins une partie du flux de fluide transitant d'amont (3) en aval (4) à travers de filtre (102).

4. Raccord selon la revendication 3, **caractérisé en ce que** le clapet (10) pare-poussière coulisse dans le circuit (6) et **en ce que** le ou des passages (103) contraignent la totalité ou la quasi-totalité du flux de fluide transitant d'amont en aval dans le circuit à passer à travers de filtre (102) quelle que soit la position aval du clapet (10) pare-poussière.

5. Raccord selon la revendication 4, **caractérisé en ce que** le ou les passages (103) comprennent un ou des conduits internes traversant le corps du clapet (10) pare-poussière et/ou traversant le corps (2) du raccord (1).

6. Raccord selon l'une quelconque des revendications 1 à 5, **caractérisé en ce que** le déplacement du clapet (7) d'isolement dans une position aval d'ouverture du circuit est réalisée par actionnement mécanique via le clapet (10) pare-poussière, ledit clapet (10) pare-poussière étant déplaçable vers l'aval par actionnement mécanique et/ou par du fluide sous pression.

7. Raccord selon l'une quelconque des revendications 1 à 6, **caractérisé en ce que** le mécanisme (7, 177, 277) anti-retour (« NRV ») comprend un canal (77) reliant l'extrémité amont (107) du clapet (7) d'isolement à une chambre (277) aval, pour transformer une pression fluidique sur la partie amont (107) du clapet (7) en un effort sur l'extrémité aval du clapet (7) d'isolement tendant à déplacer ledit clapet (7) d'isolement en position amont de fermeture.

8. Raccord selon la revendication 7, **caractérisé en ce que** le mécanisme (7, 177, 277) anti-retour (« NRV ») comporte un rapport de surfaces déterminé entre d'une part l'extrémité amont (107) du clapet (7) d'isolement soumise à un fluide amont et, d'autre part, l'extrémité aval du clapet (7) d'isolement communiquant avec la chambre (277), pour solliciter ledit clapet (7) d'isolement en position amont de fermeture lorsque son extrémité amont est soumise à du fluide sous pression.

9. Robinet pour fluide sous pression, en particulier pour gaz sous pression, avec ou sans détendeur de pression, comprenant un raccord de remplissage destiné à coopérer avec une prise de conditionnement pour permettre le remplissage dudit récipient via ledit raccord, **caractérisé en ce que** le raccord (1) de remplissage est conforme à l'une quelconque des revendications 1 à 8.

10. Récipient de fluide sous pression, en particulier bouteille de gaz sous pression, comprenant un robinet (12) conforme à la revendication 9.

11. Procédé de remplissage d'un récipient de gaz sous pression conforme à la revendication 10 au moyen d'une prise (11) de conditionnement connectée audit raccord (1) de remplissage du récipient (13), **caractérisé en ce qu'**il comporte une première étape de déplacement du clapet (10) pare-poussière vers une position aval d'ouverture de l'extrémité amont du circuit (6) via un actionnement mécanique et/ou un actionnement fluidique et une seconde étape de déplacement du clapet (7) d'isolement vers une position aval d'ouverture via un actionnement mécanique réalisé par le clapet (10) pare-poussière.

12. Procédé selon la revendication 11, **caractérisé en ce que** le clapet (10) pare-poussière est déplacé vers l'aval par une action mécanique d'une extrémité d'un pousse-clapet (111) appartenant à la prise (11) de conditionnement.

13. Procédé selon l'une quelconque des revendications 11 ou 12, **caractérisé en ce qu'**en fin de processus de remplissage d'un récipient de gaz sous pression, le clapet (7) d'isolement est refermé automatiquement lorsque l'effort mécanique exercé sur le clapet (7) devient inférieur à un seuil déterminé.

14. Procédé selon l'une quelconque des revendications 11 à 13, **caractérisé en ce qu'**en fin de processus de remplissage la fermeture du clapet (7) d'isolement est réalisée avant la fermeture du clapet (10) pare-poussière.

## Patentansprüche

1. Füllstutzen für unter Druck stehenden Fluidbehälter, der für das Zusammenwirken mit einem Konditionierungsanschluss zum Befüllen des Behälters bestimmt ist, wobei der Stutzen (1) einen Körper (2) umfasst, der einen inneren Füllkreislauf (6) zwischen einem stromaufwärtigen Ende (3) zum Anschluss an einen Konditionierungsanschluss und einem stromabwärtigen Ende (4) zum Verbinden mit einem Behälter definiert, wobei der Stutzen ein Sperrventil (7) umfasst, das relativ zu einem Sitz (8) beweglich ist zwischen einer stromaufwärtigen Stellung zum Schließen des Kreislaufs (6) und einer stromabwärtigen Stellung zum Öffnen des Kreislaufs, wobei das Sperrventil (7) in Richtung seiner stromaufwärtigen Stellung durch ein Rückstellorgan (9) beaufschlagt wird, wobei der Stutzen ferner eine Staubschutzklappe (10) umfasst, die stromaufwärts des Sperrventils (7) angeordnet ist, wobei die Staubschutzklappe (10) relativ zu dem Körper (2) beweglich ist zwischen einer stromaufwärtigen Stellung zum Schließen des stromaufwärtigen Endes des Kreislaufs (6) und einer stromabwärtigen Stellung zum Öffnen des stromaufwärtigen Endes des Kreislaufs, wobei die Staubschutzklappe (10) in Richtung ihrer stromaufwärtigen Stellung durch ein Rückstellorgan (14) beaufschlagt wird, **dadurch gekennzeichnet, dass** das Sperrventil (7) einen Rückschlagmechanismus ("NRV") (7, 177) umfasst, der eine Kraft auf das Sperrventil (7) erzeugt, die es Richtung stromaufwärts beaufschlagt, wenn dieses letzte nur einem fluidischen Druck in seinem stromaufwärtigen Teil ausgesetzt ist, und dass, wenn die Staubschutzklappe (10) in einer bestimmten stromabwärtigen Stellung ist, ein stromabwärtiges Ende (101) der Staubschutzklappe (10) ein stromaufwärtiges Ende (107) des beweglichen Sperrventils (7) drückt, um das Sperrventil (7) in Richtung seiner stromabwärtigen Stellung zum Öffnen des Kreislaufs zu bewegen.

2. Stutzen nach Anspruch 1, **dadurch gekennzeichnet, dass** die Staubschutzklappe (10) einen Filter (102) trägt, der auf der Strecke mindestens eines Teils des Fluids, das zwischen stromaufwärts (3) und stromabwärts (4) des Kreislaufs (6) fließt, angeordnet ist, wobei der Filter (102) mit der Staubschutzklappe (10) beweglich ist.

3. Stutzen nach Anspruch 2, **dadurch gekennzeichnet, dass** er ein oder mehrere Durchlässe (103) aufweist, um mindestens einen Teil des Fluidflusses, der von stromaufwärts (3) nach stromabwärts (4) durch den Filter (102) hindurch fließt, zu leiten.

4. Stutzen nach Anspruch 3, **dadurch gekennzeichnet, dass** die Staubschutzklappe (10) in dem Kreislauf (6) gleitet und dass der oder die Durchlässe (103) den gesamten oder nahezu den gesamten Fluidfluss, der von stromaufwärts nach stromabwärts in dem Kreislauf fließt, dazu zwingen, durch den Filter (102) hindurch zu fließen, unabhängig von der stromabwärtigen Stellung der Staubschutzklappe (10).

5. Stutzen nach Anspruch 4, **dadurch gekennzeichnet, dass** der oder die Durchlässe (103) eine oder mehrere innere Rohrleitungen umfassen, die den Körper der Staubschutzklappe (10) durchqueren und/oder den Körper (2) des Stutzens (1) durchqueren.

6. Stutzen nach einem der Ansprüche 1 bis 5, **dadurch gekennzeichnet, dass** die Bewegung des Sperrventils (7) in eine stromabwärtige Stellung zum Öffnen des Kreislaufs durch mechanische Betätigung über die Staubschutzklappe (10) realisiert wird, wobei die Staubschutzklappe (10) in Richtung stromabwärts durch mechanische Betätigung und/oder durch unter Druck stehendes Fluid beweglich ist.

7. Stutzen nach einem der Ansprüche 1 bis 6, **dadurch gekennzeichnet, dass** der Rückschlagmechanismus ("NRV") (7, 177, 277) einen Kanal (77) umfasst, der das stromaufwärtige Ende (107) des Sperrventils (7) mit einer stromabwärtigen Kammer (277) verbindet, um einen fluidischen Druck auf den stromaufwärtigen Teil (107) des Ventils (7) in eine Kraft auf das stromabwärtige Ende des Sperrventils (7) umzuwandeln, die dazu tendiert, das Sperrventil (7) in die stromaufwärtige Schließstellung zu bewegen.

8. Stutzen nach Anspruch 7, **dadurch gekennzeichnet, dass** der Rückschlagmechanismus ("NRV") (7, 177, 277) ein bestimmtes Oberflächenverhältnis aufweist zwischen, einerseits, dem stromaufwärtigen Ende (107) des Sperrventils (7), das einem stromaufwärtigen Fluid ausgesetzt ist, und, andererseits, dem stromabwärtigen Ende des Sperrventils (7), das mit der Kammer (277) kommuniziert, um das Sperrventil (7) in die stromaufwärtige Schließstellung zu beaufschlagen, wenn dessen stromaufwärtiges Ende unter Druck stehendem Fluid ausgesetzt ist.

9. Ventil für unter Druck stehendes Fluid, insbesondere für unter Druck stehendes Gas, mit oder ohne Druckminderventil, umfassend einen Füllstutzen, der für das Zusammenwirken mit einem Konditionierungsanschluss zum Befüllen des Behälters über den Stutzen bestimmt ist, **dadurch gekennzeichnet, dass** der Füllstutzen (1) einem der Ansprüche 1 bis 8 entspricht.

10. Unter Druck stehender Fluidbehälter, insbesondere Druckgasflasche, umfassend ein Ventil (12) nach Anspruch 9.

11. Verfahren zum Befüllen eines unter Druck stehenden Gasbehälters nach Anspruch 10 mit Hilfe eines Konditionierungsanschlusses (11), der mit dem Stutzen (1) zum Befüllen des Behälters (13) verbunden ist, **dadurch gekennzeichnet, dass** es einen ersten Schritt des Bewegens der Staubschutzklappe (10) in Richtung einer stromabwärtigen Stellung zum Öffnen des stromaufwärtigen Endes des Kreislaufs (6) über eine mechanische Betätigung und/oder eine fluidische Betätigung und einen zweiten Schritt des Bewegens des Sperrventils (7) in Richtung einer stromabwärtigen Öffnungsstellung über eine mechanische Betätigung, die durch die Staubschutzklappe (10) realisiert wird, aufweist.

12. Verfahren nach Anspruch 11, **dadurch gekennzeichnet, dass** die Staubschutzklappe (10) in Richtung stromabwärts bewegt wird durch eine mechanische Einwirkung eines Endes eines Klappenantriebs (111), der dem Konditionierungsanschluss (11) zugehörig ist.

13. Verfahren nach einem der Ansprüche 11 oder 12, **dadurch gekennzeichnet, dass** am Ende des Vorgangs zum Befüllen eines unter Druck stehenden Gasbehälters das Sperrventil (7) automatisch geschlossen wird, wenn die mechanische Kraft, die auf das Ventil (7) ausgeübt wird, kleiner als ein bestimmter Schwellwert wird.

14. Verfahren nach einem der Ansprüche 11 bis 13, **dadurch gekennzeichnet, dass** am Ende des Füllvorgangs das Schließen des Sperrventils (7) vor dem Schließen der Staubschutzklappe (10) realisiert wird.

## Claims

1. Filling connector for a pressurised fluid container, designed to cooperate with a conditioning connection so as to allow said container to be filled, the connector (1) comprising a body (2) which defines an internal filling circuit (6) between an upstream end (3) for connection to a conditioning connection and a downstream end (4) for joining to a container, the connector comprising an isolating valve (7) which is movable relative to a seat (8) between an upstream position for closing the circuit (6) and a downstream position for opening the circuit, said isolating valve (7) being urged towards its upstream position by a return member (9), the connector further comprising a dust screen valve (10) arranged upstream of the isolating valve (7), said dust screen valve (10) being movable relative to the body (2) between an upstream position for closing the upstream end of the circuit (6) and a downstream position for opening the upstream end of the circuit, said dust screen valve (10) being urged towards its upstream position by a return member (14), **characterised in that** the isolating valve (7) comprises a non-return ("NRV") mechanism (7, 177) which generates a force on the isolating valve (7) that urges said valve upstream when said valve is subjected solely to fluid pressure in its upstream portion, and **in that**, when said dust screen valve (10) is in a determined downstream position, a downstream end (101) of the dust screen valve (10) pushes an upstream end (107) of the movable isolating valve (7) so as to move the isolating valve (7) towards its downstream position for opening the circuit.

2. Connector according to claim 1, **characterised in that** the dust screen valve (10) bears a filter (102) interposed in the path of at least some of the fluid in transit between the upstream (3) and the downstream (4) of the circuit (6), the filter (102) being movable with the dust screen valve (10).

3. Connector according to claim 2, **characterised in that** it has one or more passages (103) for guiding at least some of the fluid flux in transit through the filter (102) from upstream (3) to downstream (4).

4. Connector according to claim 3, **characterised in that** the dust screen valve (10) slides within the circuit (6) and **in that** the passage(s) (103) force(s) all or virtually all of the fluid flux in transit from upstream to downstream within the circuit to pass through the filter (102), irrespective of the downstream position of the dust screen valve (10).

5. Connector according to claim 4, **characterised in that** the passage(s) (103) comprise(s) one or more internal ducts which pass through the body of the dust screen valve (10) and/or pass through the body (2) of the connector (1).

6. Connector according to any of claims 1 to 5, **characterised in that** the movement of the isolating valve (7) into a downstream position for opening the circuit is carried out by mechanical actuation by means of the dust screen valve (10), said dust screen valve (10) being movable downstream by mechanical actuation and/or by pressurised fluid.

7. Connector according to any of claims 1 to 6, **characterised in that** the non-return ("NRV") mechanism (7, 177, 277) comprises a channel (77) which connects the upstream end (107) of the isolating valve (7) to a downstream chamber (277) so as to convert fluid pressure on the downstream portion (107) of the valve (7) into a force on the downstream end of the isolating valve (7), leading to a movement of said isolating valve (7) into an upstream closure position.

8. Connector according to claim 7, **characterised in that** the non-return ("NRV") mechanism (7, 177, 277) has a determined surface ratio between, on the one hand, the upstream end (107) of the isolating valve (7) subjected to an upstream fluid and, on the other hand, the downstream end of the isolating valve (7) in communication with the chamber (277), in order to urge said isolating valve (7) into an upstream closure position when its upstream end is subjected to pressurised fluid.

9. Tap for pressurised fluid, in particular for pressurised gas, with or without a pressure-reducing valve, comprising a filling connector designed to cooperate with a conditioning connection so as to allow said container to be filled via said connector, **characterised in that** the filling connector (1) is in accordance with any of claims 1 to 8.

10. Pressurised fluid container, in particular a pressured gas bottle, comprising a tap (12) according to claim 9.

11. Method for filling a pressurised gas container according to claim 10 by means of a conditioning connection (11) which is connected to said connector (1) for filling the container (13), **characterised in that** it involves a first step of moving the dust screen valve (10) towards a downstream position for opening the upstream end of the circuit (6) by means of mechanical actuation and/or fluid actuation, and a second step of moving the isolating valve (7) towards a downstream opening position by means of mechanical actuation carried out by the dust screen valve (10).

12. Method according to claim 11, **characterised in that** the dust screen valve (10) is moved downstream by a mechanical action of an end of a push valve (111) belonging to the conditioning connection (11).

13. Method according to either claim 11 or claim 12, **characterised in that** at the end of the process of filling a pressurised gas container, the isolating valve (7) is automatically shut when the mechanical force exerted on the valve (7) falls below a determined threshold.

14. Method according to any of claims 11 to 13, **characterised in that** at the end of the filling process, the closure of the isolating valve (7) is carried out prior to closure of the dust screen valve (10).
